# EUROPEAN PATENT SPECIFICATION

(11) **EP 2 693 325 B1**
(45) Date of publication and mention of the grant of the patent: **20.04.2016**
(21) Application number: 13178608.9
(22) Date of filing: 30.07.2013
(51) Int. Cl.: G06F 3/0488, G05B 15/02, G06F 1/32, G06Q 10/00, G06F 3/0484

(54) **Energy efficient graphical interface for controlling an industrial automation system**
Energieeffiziente grafische Benutzeroberfläche zur Steuerung eines industriellen Automation System
Interface graphique à faible consommation pour contrôler un système d'automatisation industrielle

(30) Priority: 30.07.2012 US 201213561888
(43) Date of publication of application: 05.02.2014
(73) Proprietor: SAP SE, 69190 Walldorf (DE)
(72) Inventor: Marat, Rolan, San Francisco, CA 94105 (US); El-Jayousi, Mohannad, 69190 Walldorf (DE); Gauthier, Alain, 69190 Walldorf (DE); Ghorayeb, Roy, 69190 Walldorf (DE); Lavoie, Vincent, Outremont, QC H2V 3G3 (CA); Liang, Xuebo, 69190 Walldorf (DE)
(74) Representative: Richardt Patentanwälte PartG mbB

(56) References cited:
- EP-A1- 2 330 470
- US-A- 5 745 110
- Google: "Android 2.3.4 User's Guide", googleusercontent.com , 20 May 2011 (2011-05-20), XP055084158, Retrieved from the Internet: URL:http://static.googleusercontent.com/ex ternal_content/untrusted_dlcp/www.google.c om/en//help/hc/pdfs/mobile/AndroidUsersGui de-2.3.4.pdf [retrieved on 2013-10-10]

## Description

Industrial automation systems typically comprise a plurality of individual components which operation needs to be controlled, For example, operation of the components typically involves certain time periods in which the components like motors or valves are energized at certain levels. In order to simplify the control of these components, visualization of the events is helpful. Since often portable devices are used to visualize the events, the visualization process needs to be energy efficient: while portability of devices is a great benefit, challenges arise from the limited amount of energy available at such touch screen devices when operated in battery mode.
It is therefore an objective to provide for an energy efficient display of control events of an industrial automation system, a respective device and a computer program product.

Android 2.3.4 User's guide discloses a calendar application for a hand-held device. Document US5745110 discloses a method and apparatus for quickly arranging task schedule information in a calendar view format using internal caches and configurable, moveable task bars.

The invention is described in the independent claims. Preferred embodiments are described in the dependent claims.

Gantt charts are an effective tool for displaying start and finish dates of calendar elements. By using touch screen devices like mobile phones or tablets, displaying of Gantt charts on the graphical user interfaces of such devices is a convenient way of keeping track of upcoming calendar (control) events without requiring direct access to desktop computers. Thus, this may provide for a convenient way of controlling machines in an industrial automation system.
Embodiments of the invention may have the further advantage that due to the usage of the cache a refresh of the calendar region can be performed fast with minimized energy consumption. Upon refresh, only the tile map entities need to be determined which can be identified via their column number in step f). Thus, no extensive coordinate calculations for placing the calendar entities are necessary, which relieves load from the processor of the portable device. Further, a cache lookup is typically very fast such that the refresh of the calendar region is accelerated.
A refresh of the calendar region may be the result of adding an additional calendar event via a calendar entity. Even though, a rearrangement of all calendar entities on the graphical user interface may be necessary, extensive coordinate calculations for correct placement of all these calendar entities is not necessary.
In accordance with an embodiment of the invention, coordinates of the calendar region are defined by a coordinate system, the coordinate system comprising a first and a second coordinate axis, the first coordinate axis being parallel to the rows and the second coordinate axis being parallel to the columns of the tile map entities, wherein the origin coordinates assigned to the calendar entities comprise a coordinate on the first coordinate axis, wherein determining for each calendar entity a tile map entity in which to draw the calendar entity comprises determining a row, wherein drawing the calendar entity in the calendar region comprises positioning the calendar entity in accordance with its coordinate on the first coordinate axis and the determined row.

Thus, the processor of the mobile device is only occupied with determining a row number, accessing the cache and retrieving all further information for drawing the calendar entity in that row.

In accordance with an embodiment of the invention, dividing of the graphical user interface into the columns is performed by analyzing the time periods specified by the calendar entities and selecting a width of the columns such that the dimension of each calendar entity matches exactly one or more successive columns.

This may have the advantage that a predetermination of the dimension of each calendar element is limited at most to the height of the calendar element. The width is dynamically determined by analyzing the time periods specified by the calendar entities and by selecting an according number of columns when displaying the calendar element. Even a rescaling of the timeline may not require a recalculation of the width of any calendar element, since the number of columns may remain constant - this effects just a single calculation of the widths of the columns. The latter holds especially in case all the columns have the same dimensions.

In accordance with an embodiment of the invention, for each calendar entity, the dimensions of the calendar entity comprise an indication of the successive columns corresponding to the time period specified by the calendar entity, wherein positioning the calendar entity in accordance with its origin coordinates and dimensions comprises positioning the calendar entity in accordance with the indicated successive columns.

In accordance with an embodiment of the invention, the calendar entities are associated with respective detail entities describing high level information of the respective calendar entities, wherein the method further comprises
j) assigning the detail entities origin coordinates and dimensions of the graphical user interface;
k) storing information about the detail entities into the cache, wherein the stored information includes for each detail entity the origin coordinates and the dimensions;
I) determining for each detail entity a tile map entity in which to draw the detail entity on the graphical user interface, wherein the determination is made avoiding an overlap of a display of the detail entities and the calendar entities on the graphical user interface, wherein the determination is done by comparing the origin coordinates and the dimensions of all the calendar entities and the detail entities, wherein for a detail entity the determined tile map entity is bordering the tile map entity of the respective calendar entity,
m) retrieving from the cache the origin coordinates and dimensions of the determined tile map entities of the detail entities,
n) displaying the detail entities on the graphical user interface, wherein said displaying comprises for each detail entity drawing the calendar entity in the calendar region by positioning the detail entity in accordance with its origin coordinates and dimensions and the retrieved origin coordinates and dimensions of the tile map entity determined for the detail entity;
wherein in response to the receiving of the request for refreshing said calendar region, the method further comprises :
- retrieving, from the cache for each detail entity the origin coordinates and the dimensions;
- repeating steps I)-n).

This may have the advantage, that any details associated with a calendar entity can be displayed as readily as the calendar entities themselves. Nevertheless, power consumption for this process is also limited due to the involvement of the cache lookups.

Embodiments may be discussed in portable touchscreen devices to efficiently display information about calendar entities. A reference point on a graphical user interface may be determined. The reference point may be represented by coordinates. The graphical user interface may be divided into tile map entities. Information about the tile map entities may be stored into a cache. The stored information may include an origin and dimensions of each tile map entity, and the origin may be represented relative to the reference point. Information needed to position a calendar entity may be retrieved from the cache. The calendar entity may be drawn on the graphical user interface based on the retrieved information needed to position the calendar entity.

Function(s) may be assigned to user action(s) associated with the calendar entity. The function(s) may be executed in response to the user action(s). Information needed to position a detail box corresponding to the calendar entity may be retrieved from the cache. The detail box may be drawn on the graphical user interface based on the retrieved information needed to position the detail box. Label(s) corresponding to each detail associated with the detail box may be drawn. Label(s) may be truncated based on dimensions of the detail box. Function(s) may be assigned to user action(s) associated with the label(s). The function(s) may be executed in response to the user action(s).

Each calendar entity may include attributes which defined metadata associated with the calendar entity. For example, a calendar entity may represent a control event for a component of an automation system. For example, the control event may comprise the operation of a valve or a motor. Thus, the handheld touch-screen device may be used in an industrial automation system for controlling the system.

The control event may have a start date and an end date (a control period). The control may regulate operation of a motor or a valve, may regulate an electrical current or a fluid flow. The calendar entity may include additional information in form of attributes such as a current temperature of the mechanical components involved in the control event (like said motor or valve), a current radiation value measured at said mechanical component, the start date of the control, and the end date of the control. It has to be noted, that the term 'date' is not limited to day, month and year. This may also comprise a very detailed absolute time given in seconds or milliseconds.

Attributes of calendar entities may indicate a range of values. For example, in an embodiment, a calendar entity may include one or more attributes indicating the time period for which the entity is valid. The time period may be implemented by either defining a single time period attribute associated with the calendar entity or by defining a start date attribute and an end date attribute associated with the calendar entity.

### BRIEF DESCRIPTION OF THE DRAWINGS

FIG. 1 illustrates a GUI to display calendar entities.
FIG. 2 illustrates a GUI to display calendar entities.
FIG. 3 illustrates a GUI to display calendar entities.
FIG. 4 illustrates a cache/table to store details of tile map entities.
FIG. 5 shows an exemplary architecture.

### DETAILED DESCRIPTION

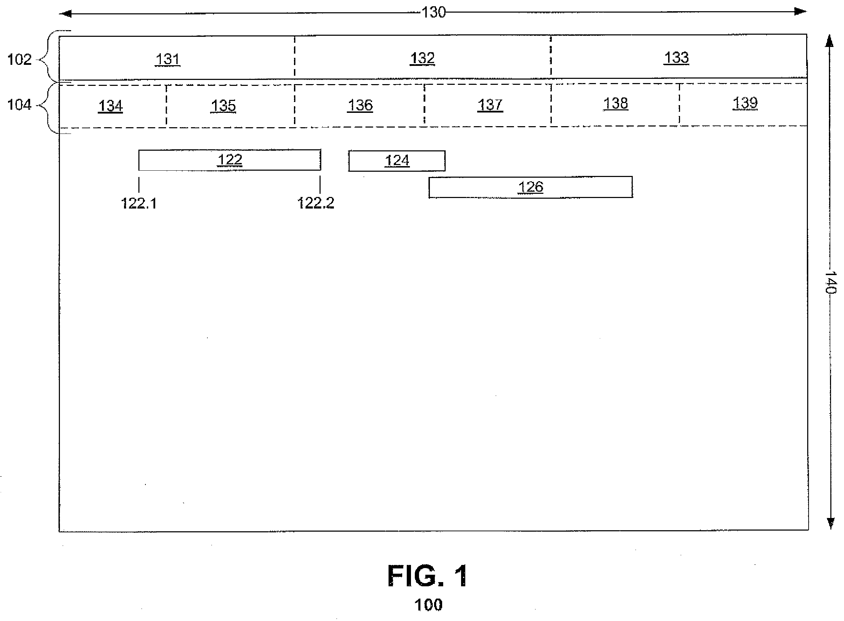

FIG. 1 illustrates a GUI 100 to display calendar entities according to an embodiment. calendar entities may be displayed on a GUI 100 in an organized manner to visually convey information about the calendar entities. The GUI 100 may display one or more scales 102, 104 on the x-axis 130 and/or y-axis 140. The GUI 100 may display visual representations of calendar entities such as 122, 124, and 126 mapped in relationship to the attributes on the x-axis 130 and/or y-axis 140.

The attribute(s) displayed across the x-axis 130 and/or y-axis 140 may be presented as one or more scales displaying attribute values (for example, 102 and 104). if multiple scales are presented on a particular axis, each scale may be graduated based on different granularities. For example, scales 102 and 104 may represent time periods. Scale 102 may be graduated into year units. Specifically, each of 131, 132, and 133 may represent a year. Scale 104 may be graduated on a semi-annual basis. Specifically, 134 - 139 may each represent half of a year.

There may be a correlation between the multiple scales on a particular axis. For example, there may be a correlation between the units of scale 102 and scale 104. Time period 131 on scale 102 may represent a particular year, such as year 2012. The time period 134 may represent the first half of the year 2012, and the time period 135 may represent the second half of year 2012. In an embodiment the correlated portions of multiple scales may be presented directly above/below (x-axis) or directly beside (y-axis) each other. For example, time period 131 may be located directly above/below corresponding time periods 134 and 135.

The scale(s) displayed on the x-axis and/or y-axis 102 and 104 may be a range of contiguous values and/or discrete values. For example, the scales 102 and 104 may represent a contiguous time period of three years.

One or more scales (not shown) may be presented on the y-axis 140. The y-axis scale(s) may be presented and function similar to the x-axis scale(s) described above. Although only two axes (x and y) are illustrated in FIG. 1, a person having ordinary skill in the art will appreciate that GUI 100 may be extended to display additional axes. For example, a z-axis (with corresponding scale(s)) may be displayed by utilizing shading to show the third dimension. In a further example, the z-axis (with corresponding scale(s)) may be presented by displaying GUI 100 on a display which is 3-dimension (3D) compatible.
The calendar entity(s) displayed on the GUI 100 may be positioned and presented based on respective attribute value(s) of the calendar entity(s) relative to the x-axis and/or y-axis scale(s) of GUI 100. In an example embodiment, scale 102 may be displayed on the GUI 100 and may indicate a time period range as explained above. Calendar entities 122, 124, and 126 may be visual representations of control events. Each calendar entity represented by 122, 124, and 126 may include attributes indicating the time period (duration) of the respective control event. The calendar entity visual representations 122, 124, and 126 may be presented to visually convey the span of the control periods, and the start/end of the control periods. For example, time periods 131, 132, and 133 may represent years 2012, 2013, and 2014 respectively. Control calendar entity 122 may have a control period from April 14, 2012 to January 23, 2013. Thus, calendar entity 122 may be presented as a horizontal bar extending from start point 122.1 positioned below time period 131 to end point 122.2 positioned below time period 132. The start point 122.1 may line up with a point in the time period 131 which approximately corresponds to April 14, 2012, and the end point 122.2 may line up with a point in the time period 132 which approximately corresponds to January 23, 2013.

In an example embodiment, multiple scales 102 and 104 may be presented on the GUI 100 and the calendar entity visual representations 122, 124, and 126 may be presented relative to the multiple scales. For example, time periods 134, 135, and 136 may represent the first half of year 2012, the second half of year 2012, and the first half of year 2013 respectively. Control event (calendar entity) 122 may have a control period from April 14, 2012 to January 23, 2013 as described previously. Thus, calendar entity 122 may be presented as a horizontal bar extending from start point 122.1 positioned below time periods 131 and 134 to end point 122.2 positioned below time periods 132 and 136. The start point 122.1 may line up with points in the time periods 131 and 134 which approximately correspond to April 14, 2012, and the end point 122.2 may line up with points in the time periods 132 and 136 which approximately correspond to January 23, 2013.

The GUI 100 may include multiple axes and one or more scales on each of the multiple axes. Each axis (and the associated scale(s)) may represent different calendar entity attributes. Thus, the calendar entity(s) presented on the GUI 100 may be presented relative to the scale(s) on each axis. For example, the scale(s) on an x-axis may represent time periods and the scale(s) on a y-axis may represent temperature ranges. Consequently, the bars 122, 124, and 126 representing calendar entities such as control events may be displayed based on the calendar entities' respective time periods. The length of the bars 122, 124, and 126 may correspond to the time period, and the height of the bars 122, 124, and 126 may correspond to the temperature. Similarly, calendar entities may be displayed relative to three axes by displaying the calendar entities as 3D bars and varying the length, width, and depth of the bars to correspond to the scale(s) on the three axes.

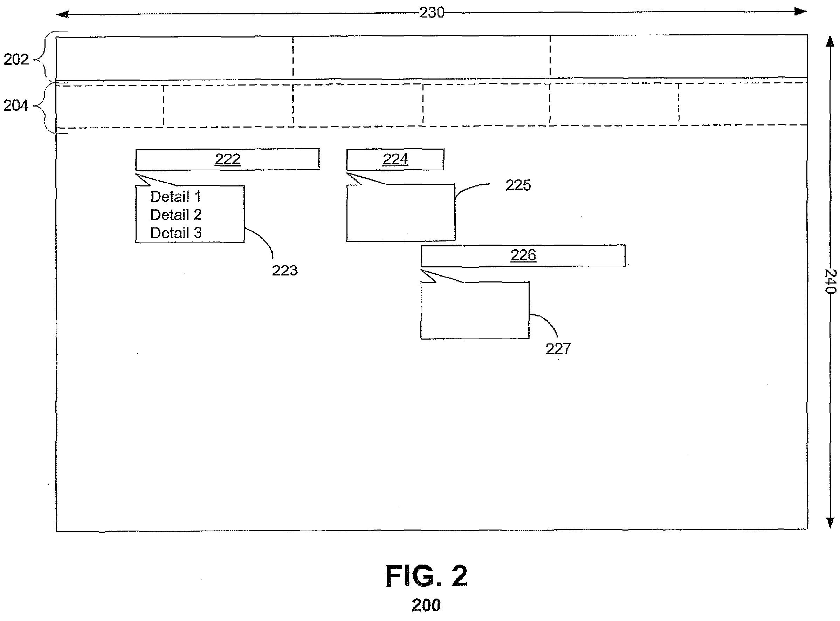

FIG. 2 illustrates a GUI 200 to display calendar entities according to an embodiment. calendar entities may be displayed on a GUI 200 in an organized manner to visually convey information about the calendar entities. The GUI 200 may display one or more scales 202 and 204 on the x-axis 230 and/or y-axis 240. The GUI 200 may display visual representations of calendar entities such as 222, 224, and 226 mapped in relationship to the attributes on the x-axis 230 and/or y-axis 240 as discussed in the description pertaining to FIG. 1 above. The GUI 200 may display detail boxes 223, 225, and 227 which present details about calendar entities associated with calendar entity visual representations 222, 224, and 226 respectively.

The detail boxes 223, 225, and 227 may display attributes and/or other metadata associated with the respective calendar entities. The information presented in the detail boxes 223, 225, and 227 may be customized through GUI 200 and/or another GUI so that only the required details are displayed. The size of the detail boxes 223, 225, and 227 may be customized through GUI 200 and/or another GUI to tweak the readability of the information presented in the detail boxes. The user may be able to dynamically change the size of a detail box by, for example, selecting the border(s) of the detail box and dragging the border(s) of the detail box to a desired position. The user may select and drag the border(s) of the detail box by, for example, his/her finger (when utilizing a touch screen), a mouse, keyboard, trackball, etc. all detail boxes 223, 225, and 227 may be displayed without the need for a user to perform any actions on calendar entity visual representations 222, 224, and 226. Specifically, the detail boxes may be displayed without the need for the user to click on or hover a cursor over the calendar entity visual representations 222, 224, and 226.

In a further embodiment, a toggle switch (not shown) may be presented on the GUI 200 to turn on/off the display of detail boxes. Activating the toggle switch when the detail boxes are displayed may remove all detail boxes 223, 225, and 227 from the GUI 200. In addition, the calendar entity visual representations 222, 224, and 226 may be repositioned on the GUI 200 to better utilize the space realized from not displaying the detail boxes 223, 225, and 227. Activating the toggle switch when the detail boxes 223, 225, and 227 are not displayed may re-display the detail boxes 223, 225, and 227 again. A person having ordinary skill in the art will appreciate that the toggle switch may be implemented in many ways including a button, radio buttons, check boxes, drop down menus, etc. The toggle switch may not be presented on the GUI 200, but may be implemented through output from a motion sensor within the device displaying the GUI 200. For example, shaking and/or tilting a PC tablet in a particular manner may toggle the display of detail boxes. Such toggling will force the GUI to refresh again. However, as described above, refreshing is optimized by the usage of a cache.

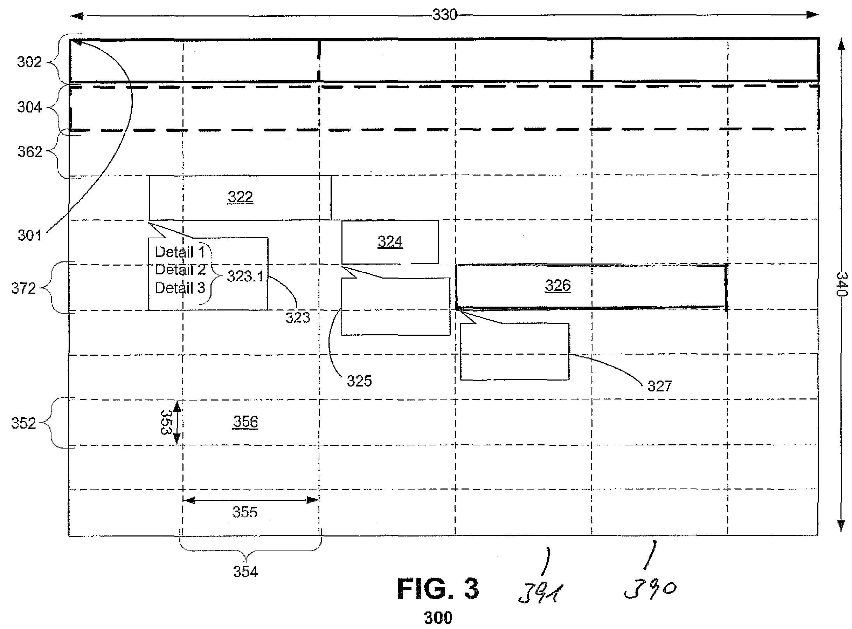

FIG. 3 illustrates a GUI 300 to display calendar entities according to an embodiment. calendar entities may be displayed on GUI 300 in an organized manner to visually convey information about the calendar entities. The GUI 300 may display one or more scales 302 and 304 on the x-axis 330 and/or y-axis 340. The GUI 300 may display visual representations of calendar entities such as 322, 324, and 326 mapped in relationship to the attributes on the x-axis 330 and/or y-axis 340 as discussed in the description pertaining to FIG. 1 above. The GUI 300 may display detail boxes 323, 325, and 327 which present details about calendar entities associated with calendar entity visual representations 322, 324, and 326 respectively as discussed in the description pertaining to FIG. 2 above.

The information presented on GUI 300 may be drawn and/or rendered based on a coordinate system. The visual information may be drawn based on a Cartesian coordinate system using absolute values (i.e., (x,y) coordinates without regard to the sign of x or y). a corner, such as the top left corner 301 of the GUI 300 may represent the origin (0,0) of the coordinate system. The information presented on the GUI 300 may be drawn by using the origin 301 as a reference point.

The scales 302 and 304 may be drawn relative to the reference point 301. The drawing of scales 302 and 304 may be determined by calculating the point of placement (i.e., (x,y) coordinates) of the top left corner (or origin) of the scales 302 and 304, and the dimensions (i.e., the width and height) of the scales 302 and 304. For example, the point of placement of the origin of scale 302 may be (0,0), the width may be 1920 pixels, and the height may be 50 pixels. Similarly, the point of placement of the origin of scale 304 may be (0,50) since scale 304 is right below scale 302, the width may be 1920 pixels, and the height may be 50 pixels. The above information such as origin and dimensions may be provided via a programming language (dynamically or statically), and upon execution of the programming language, the scales 302 and 304 may be drawn on the GUI 300.

The GUI 300 may be divided into rows such as 352 and columns such as 354. A column or row may be referred to as a tile map entity. The intersection of a row and a column such as 356 may be referred to as a tile. The rows and columns may be positioned based on the coordinate system discussed above. The rows and columns may not be displayed on the GUI 300, but may be used to draw information on GUI 300 such as visual representations 322, 324, and 326, and their associated detail boxes 323, 325, and 327. The height 353 of all rows in GUI 300 may be equal and the width 355 of all columns in GUI 300 may be equal. The row height 353 may be dynamically determined based on the content displayed on GUI 300.

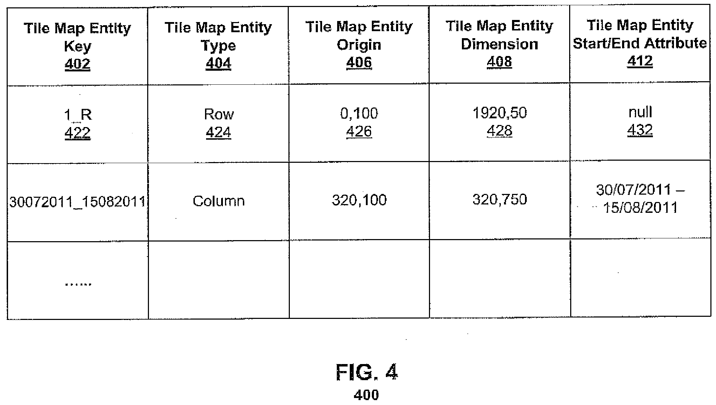

Details of the tile map entities from GUI 300 may be recorded in a cache and/or table 400 as illustrated in FIG. 4. The cache 400 may be keyed by a tile map entity identifier 402. The tile map entity identifier 402 may be a shorthand identifier such as the tile map entity's position appended to the tile map entity type. For example, the first row 362 from GUI 300 may be keyed by a unique identifier such as "1_R" (422). A column may be keyed by the attribute value where the column begins (such as a calendar date value) and the attribute value where the column ends. The cache 400 may include the tile map entity type 404 of each tile map cache entry. The tile map entity type may indicate whether an entry is a row or a column. The cache 400 may include the tile map entity origin 406 of each tile map cache entry. The tile map entity origin may indicate the coordinates of a predetermined point such as the top left corner of the tile map entity. For example, the cache 400 may include information which indicates that the origin of the first row 362 is 0,100 (426). The cache 400 may include the tile map entity dimensions 408 of each tile map cache entry. The tile map entity dimensions may indicate the width and height of the tile map entity. For example, the cache 400 may include information which indicates that the width of the first row 362 is 1920 pixels and that the height is 50 pixels (428). The cache 400 may include the tile map entity start/end attribute values 412 of each tile map cache entry. The tile map entity start/end attribute values may indicate the attribute values relative to a scale displayed on GUI 300. For example, a column cache entry may indicate the attribute value where the respective column begins (such as a calendar date value) and the attribute value where the column ends.

Prior to drawing/rendering each calendar entity visual representation on GUI 300 the origin and dimensions of each calendar entity representation and corresponding detail boxes may be determined. In the example of FIG. 3, any calendar entitles are displayed with respect to the horizontal timeline 302. Therefore, the determination of each calendar representation 322, 324 and 326 may be limited to the horizontal x-coordinate, i.e. the starting point and the width of each calendar entity. The width will correspond to the duration of the respective event. These details will be stored in the cache 400.

In case of drawing the calendar entities, either due to a refresh of the GUI or a first time drawing of the Gantt chart, information needed for the placement of the calendar entity visual representation/detail box may be retrieved from the cache 400. For example, a method may determine that the calendar entity visual representation 326 may be drawn in row 372. Therefore, the method may look up the cache entry in cache 400 which corresponds to row 372. From the cache entry corresponding to row 372, the method may determine the y-coordinate of the origin of the calendar entity representation 326 and the height of the calendar entity representation 326. Selection of this appropriate row 372 may consider avoiding an overlap of a display of the calendar entities on the graphical user interface, wherein the determination is done by comparing the origin coordinates and the dimensions of all the calendar entities.

Generally, the role of row of column may be switched.

Instead of storing in the cache the width of each calendar entity, the respective columns may be associated with each calendar entity in the cache in case they cover exactly the time duration of the calendar event. This if for example possible for the calendar entity 326 which is located in y-position in row 372 and covers in x-position columns 391 and 392. Thus, for calendar entity 326 a reference in the cache to columns 391 and 392 is sufficient. This substitutes the origin coordinates and the dimensions associated with said calendar entity 326.

Based on the determinations discussed above, the calendar entity visual representations 322, 324, and 326 may be drawn/rendered using user interface elements such as segmented control, button, rectangle, or any other usable and performance efficient shape. Functions triggered in response to a click, drag, tap, swipe, natural gesture, and/or special actions performed by the user may be assigned. For example, tapping on the calendar entity visual representation 322 may display a chart with details pertaining to the calendar entity visual representation. The mapping between the functions and the user actions may be stored in a cache and/or database table. Label texts of the calendar entity visual representations 322, 324, and 326 may be drawn. On certain platforms, such as the iPad, a label text may be drawn using labels to synchronize update of . the user interface element representing the calendar entity visual representation and the user interface element representing the calendar entity representation's label. Doing so may prevent undesirable behavior such as labels asynchronously moving relative to the associated calendar entity visual representation during user interface updates.

Based on the determinations discussed above, the calendar entity detail boxes (i.e. detail entities) 323, 325, and 327 may be drawn/rendered using user interface elements such as segmented control, button, rectangle, or any other usable and performance efficient shape. This means, that the placement of the calendar entity detail boxes on the GUI may be determined in an analogous manner as discussed with respect to the calendar entities. Since calendar entity detail boxes (i.e. detail entities) are not associated with a time duration, the calendar entity detail boxes may be associated a predefined dimension, i.e. in FIG. 3 a predefined width.

This width may again be defined by a predefined number of adjacent columns. In case the left vertical edge of each calendar entity detail box is in horizontal direction matching the left vertical edge of the respective calendar entity (as shown in FIG. 3), with respect to a calendar entity detail box the content of the cache may be limited to an association of a calendar entity detail box to its associated calendar entity. After determining a row where to place the calendar entity detail box, the left edge can be immediately retrieved from the cache entry of the corresponding calendar entity and the width is a predefined number. Alternatively, the width may again be given by a number of successive columns. Alternatively, the width may be dynamically determined based on the textual length of the information to be displayed in the calendar entity detail box.

Preferably, the calculation of the vertical position of the calendar entity detail box is limited to the criteria of avoiding an overlap of a display of the detail entities and the calendar entities on the graphical user interface, and that a detail entity is always immediately bordering the tile map entity of the respective calendar entity.

Functions triggered in response to a click, drag, tap, swipe, natural gesture, and/or special actions performed by the user may be assigned. For example, in response to tapping a detail box via a touch screen, the detail box may be displayed larger so that the user can more easily view the information in the detail box. The calendar entity detail boxes may include dynamic content. Specifically, the details within the detail boxes may change based on the state of the underlying calendar entity, Multiple details may be displayed within a single detail box. For example, detail box 323 may display three details 323.1 about the underlying calendar entity. Each detail within the detail box 323 may be drawn as a label. The content of each label may be truncated if the content does not fit within the respective detail box without wrapping. A method may check the size of the label's detail box, determine how much of the label's content can fit within the detail box without wrapping, and algorithmically truncate the label to a size which fits the detail box if necessary.

Functions triggered in response to a click, drag, tap, swipe, natural gesture, and/or special actions performed by the user may be assigned to each label displaying content of a detail. For example, tapping a label via a touch screen may display a non-truncated version of the label. The mapping between the functions and the user actions may be stored in a cache and/or database table. One or more functions may be assigned to user actions associated with a single label. For example, one or more functions may be assigned to the label displaying "detail 1" within detail box 323, one or more functions may be assigned to the label displaying "detail 2" within detail box 323, and one or more functions may be assigned to the label displaying "detail 3" within detail box 323.

A person having ordinary skill in the art will appreciate that although the discussion above refers to the top left corner of the GUI 300, the calendar entity visual representations, etc., as origins, any point within/on the border of the entities may be fixed as the origin in other embodiments. Thus, the calculations explained above may vary accordingly. The foregoing discussion refers to pixels as the unit for measuring dimensions such as the height and width of columns, rows, etc. However, any unit capable of measuring absolute/relative distance may be utilized in other embodiments. Similarly, although the above discussion illustrates drawing/rendering calendar entity related information on a Cartesian coordinate system, the discussed principles may be applied to any other coordinate system including a Polar coordinate system, a cylindrical/spherical coordinate system, and a homogeneous coordinate system.

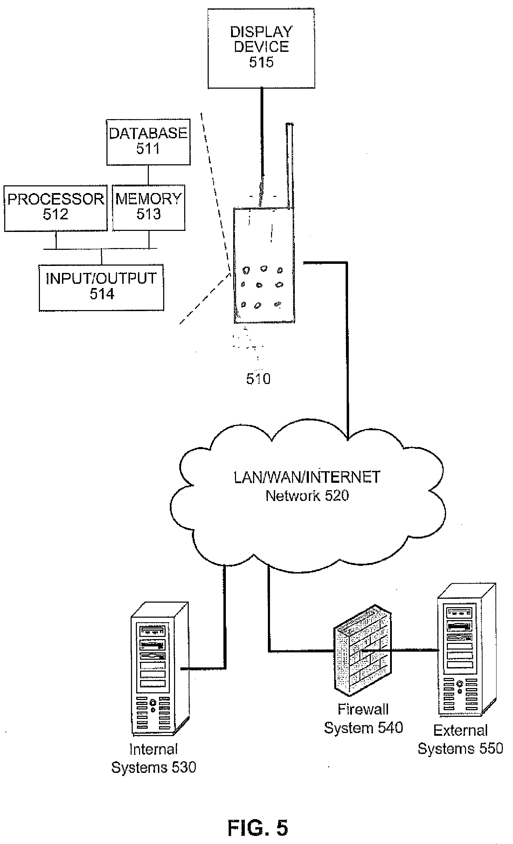

FIG. 5 shows an exemplary architecture in an embodiment of the invention. The system running an application to view, create, or modify calendar entities 510 may be coupled to a display device 515, existing internal systems 530 through a network 520 and to external systems 550 through the network 520 and firewall system 540. The system running an application to view, create, or modify calendar entities 510 may include a tablet PC or a mobile phone. The display device 515 is typically a touch screen included in the tablet PC or mobile phone. The existing internal systems 530 may include a server and may provide data and/or other data. The external systems 550 may include a server and may be maintained by a third party, such as an information service provider, and may contain data and/or other data, that may be updated by the third party on a periodic basis. The system running an application to view, create, or modify calendar entities 510 may interact with these external systems to obtain updates through a firewall system 540 separating the internal systems from the external systems.

The external systems or the internal systems may represent machines of an industrial automation system.

A person having ordinary skill in the art will appreciate that while internal systems 530 and external systems 550 are included in FIG. 5, in some embodiments, one or both of these systems may not be required. The functionality provided by the internal systems 530 and external systems 550 may be provided by the system running the application to view, create, or modify calendar entities 510.

Each of the systems in FIG. 5 may contain a processing device 512, memory 513, a database 511, and an input/output interface 514, all of which may be interconnected via a system bus. In various embodiments, each of the systems 510, 530, 540, and 550 may have an architecture with modular hardware and/or software systems that include additional and/or different systems communicating through one or more networks. The modular design may enable a skilled person to add, exchange, and upgrade systems, including using systems from different vendors in some embodiments. Because of the highly customized nature of these systems, different embodiments may have different types, quantities, and configurations of systems depending on the environment and organizational demands.

Memory 513 may contain different components for retrieving, presenting, changing, and saving data. Memory 513 may include a variety of memory devices, for example, Dynamic Random Access Memory (DRAM), Static RAM (SRAM), flash memory, cache memory, and other memory devices. Additionally, for example, memory 513 and processing device(s) 512 may be distributed across several different computers that collectively comprise a system.

Database 511 may include any type of data storage adapted to searching and retrieval. The database 511 may include SAP database (SAP DB), Informix, Oracle, DB2, Sybase, and other such database systems. The database 511 may include SAP's HANA (high performance analytic appliance) in-memory computing engine and other such in-memory databases.

Processing device 512 may perform computation and control functions of a system and comprises a suitable central processing unit (CPU). Processing device 512 may comprise a single integrated circuit, such as a microprocessing device, or may comprise any suitable number of integrated circuit devices and/or circuit boards working in cooperation to accomplish the functions of a processing device. Processing device 512 may execute computer programs, such as object-oriented computer programs, within memory 513.

The foregoing description has been presented for purposes of illustration and description. It is not exhaustive and does not limit embodiments of the invention to the precise forms disclosed. Modifications and variations are possible in light of the above teachings or may be acquired from the practicing embodiments consistent with the invention. For example, some of the described embodiments may include software and hardware, but some systems and methods consistent with the present invention may be implemented in software or hardware alone. Additionally, although aspects of the present invention are described as being stored in memory, this may include other computer readable media, such as secondary storage devices, for example, solid state drives, or DVD ROM; the Internet or other propagation medium; or other forms of RAM or ROM.

## Claims

1. A computer-implemented method for energy-saving in a portable touch-screen device comprising a graphical user interface with a touch screen and a memory, the memory comprising a cache, the method comprising:
a) drawing a timeline (302) on the graphical user interface (300), wherein the timeline (302) extends from a start time coordinate to an end time coordinate of the graphical user interface (300),
b) dividing the graphical user interface (300) into rows and columns hereafter referred to as tile map entities (372, 391),
c) storing information about the tile map entities into a cache (400), wherein the stored information includes origin coordinates and dimensions of each tile map entity on the graphical user interface (300),
d) assigning calendar entities (322) to be displayed in order to display the calendar entities in the graphical user interface (300) using the origin coordinates and dimensions of each calendar entity, wherein each calendar entity (322) is representative of a time period specified by the calendar entity, wherein the origin coordinates and the dimensions of each calendar entity are adapted for allowing each calendar entity to be displayed with respect to the timeline (302) using the starting point and the width of the calendar entity, wherein the width corresponds to the time period;
e) storing information about the calendar entities (322) into the cache (400), wherein the stored information includes for each calendar entity the origin coordinates and the dimensions of the calendar entity;
f) determining for each calendar entity a tile map entity in which to draw the calendar entity on the graphical user interface, wherein the determination is made avoiding an overlap of a display of the calendar entities on the graphical user interface, wherein the determination is done by comparing the origin coordinates and the dimensions of all the calendar entities (322),
g) retrieving from the cache the origin coordinates and dimensions of the determined tile map entities (372, 391),
h) displaying the calendar entities on the graphical user interface (300), wherein said displaying comprises for each calendar entity drawing the calendar entity in the graphical user interface (300) by positioning the calendar entity in accordance with its origin coordinates and dimensions and the retrieved origin coordinates and dimensions of the tile map entity determined for the calendar entity;
i) receiving a request for refreshing said graphical user interface, and in response:
- retrieving, from the cache for each calendar entity of the calendar entities the origin coordinates and the dimensions of the corresponding tile map entity;
- repeating step f) - h),
wherein dividing of the graphical user interface (300) into the tile map entities comprising rows and columns is performed by analyzing the time periods specified by the calendar entities and selecting a width of the columns such that the dimension of each calendar entity (322) matches exactly one or more successive columns, wherein for each calendar entity, the dimensions of the calendar entity indicate the successive columns corresponding to the time period specified by the calendar entity (322).

2. The method of claim 1, wherein coordinates in the graphical user interface are defined by a coordinate system, the coordinate system comprising a first and a second coordinate axis, the first coordinate axis being parallel to the rows and the second coordinate axis being parallel to the columns of the tile map entities, wherein the origin coordinates assigned to the calendar entities comprise a coordinate on the first coordinate axis, wherein determining for each calendar entity (322) a tile map entity (372, 391) in which to draw the calendar entity comprises determining a row, wherein drawing the calendar entity in the graphical user interface comprises positioning the calendar entity in accordance with its coordinate on the first coordinate axis and the determined row.

3. The method of claim 1, wherein positioning the calendar entity (322) in accordance with its origin coordinates and dimensions comprises positioning the calendar entity (322) in accordance with the indicated successive columns.

4. The method of any of the previous claims, wherein the calendar entities are associated with respective detail entities describing metadata associated with the respective calendar entities, wherein the method further comprises
j) assigning the detail entities origin coordinates and dimensions of the graphical user interface;
k) storing information about the detail entities into the cache (400), wherein the stored information includes for each detail entity the origin coordinates and the dimensions;
I) determining for each detail entity a tile map entity (372, 391) in which to draw the detail entity on the graphical user interface (300), wherein the determination is made avoiding an overlap of a display of the detail entities and the calendar entities on the graphical user interface (300), wherein the determination is done by comparing the origin coordinates and the dimensions of all the calendar entities (322) and the detail entities, wherein for a detail entity the determined tile map entity is bordering the tile map entity of the respective calendar entity,
m) retrieving from the cache the origin coordinates and dimensions of the determined tile map entities of the detail entities,
n) displaying the detail entities on the graphical user interface (300), wherein said displaying comprises for each detail entity drawing the calendar entity in the graphical user interface by positioning the detail entity in accordance with its origin coordinates and dimensions and the retrieved origin coordinates and dimensions of the tile map (372, 391) entity determined for the detail entity;
wherein in response to the receiving of the request for refreshing said calendar region, the method further comprises :
- retrieving, from the cache (400) for each detail entity the origin coordinates and the dimensions;
- repeating steps I)-n).

5. The method of any of the previous claims, further comprising:
assigning at least one function to at least one user action associated with the calendar entity, wherein the at least one function is executed in response to the at least one user action.

6. The method of any of the previous claims 4-5, further comprising:
drawing at least one label corresponding to each metadata associated with the detail entity.

7. The method of claim 6, wherein the at least one label is truncated based on dimensions of the detail entity.

8. The method of claim 6 or 7, further comprising:
assigning at least one function to at least one user action associated with the at least one label, wherein the at least one function is executed in response to the at least one user action.

9. The method of any of the previous claims, wherein the calendar entities (322) represent control events of components of an industrial automation system.

10. A portable touch-screen device comprising a graphical user interface with a touch screen, a processor for controlling the device and a memory for storing machine executable instructions, the memory comprising a cache, wherein execution of the instructions causes the processor to:
a) drawing a timeline (302) on the graphical user interface (300), wherein the timeline (302) extends from a start time coordinate to an end time coordinate of the graphical user interface (300),
b) dividing the graphical user interface (300) into rows and columns hereafter referred to as tile map entities (372, 391),
c) storing information about the tile map entities (372, 391) into a cache (400), wherein the stored information includes origin coordinates and dimensions of each tile map entity on the graphical user interface (300),
d) assigning calendar entities (322) to be displayed in order to display the calendar entities (322) in the graphical user interface (300) using the origin coordinates and dimensions of each calendar entity, wherein each calendar entity (322) is representative of a time period specified by the calendar entity, wherein the origin coordinates and the dimensions of each calendar entity are adapted for allowing each calendar entity to be displayed with respect to the timeline (302) using the starting point and the width of the calendar entity, wherein the width corresponds to the time period;
e) storing information about the calendar entities (322) into the cache (400), wherein the stored information includes for each calendar entity the origin coordinates and the dimensions of the calendar entity;
f) determining for each calendar entity (322) a tile map entity (372, 391) in which to draw the calendar entity on the graphical user interface (300), wherein the determination is made avoiding an overlap of a display of the calendar entities on the graphical user interface (300), wherein the determination is done by comparing the origin coordinates and the dimensions of all the calendar entities (322),
g) retrieving from the cache the origin coordinates and dimensions of the determined tile map entities (372, 391),
h) displaying the calendar entities on the graphical user interface (300), wherein said displaying comprises for each calendar entity drawing the calendar entity (322) in the graphical user interface (300) by positioning the calendar entity in accordance with its origin coordinates and dimensions and the retrieved origin coordinates and dimensions of the tile map entity determined for the calendar entity;
i) receiving a request for refreshing said graphical user interface (300), and in response:
- retrieving, from the cache (400) for each calendar entity of the calendar entities (322) the origin coordinates and the dimensions of the corresponding tile map entity (372, 391);
- repeating step f) - h),
wherein dividing of the graphical user interface (300) into the tile map entities comprising rows and columns is performed by analyzing the time periods specified by the calendar entities and selecting a width of the columns such that the dimension of each calendar entity (322) matches exactly one or more successive columns, wherein for each calendar entity, the dimensions of the calendar entity indicate the successive columns corresponding to the time period specified by the calendar entity (322).

11. The device of claim 10, wherein the device is a mobile phone or a tablet computer.

12. The device of claim 11, wherein the device is operable for controlling an industrial automation system.

13. A computer program product, the computer program product carrying computer executable code for execution by a processor controlling an apparatus, wherein execution of the instructions cause the processor to perform the method steps as claimed in the previous claims 1-9.

## Patentansprüche

1. Computerimplementiertes Verfahren zur Energieeinsparung in einer tragbaren Touchscreen-Vorrichtung, die eine grafische Benutzerschnittstelle mit einem Touchscreen und einen Speicher umfasst, wobei der Speicher einen Cache umfasst, wobei das Verfahren umfasst:
a) Zeichnen einer Zeitachse (302) auf der grafischen Benutzerschnittstelle (300), wobei die Zeitachse (302) von einer Startzeitkoordiante bis zu einer Endzeitkoordinate der grafischen Benutzerschnittstelle (300) verläuft,
b) Teilen der grafischen Benutzerschnittstelle (300) in Zeilen und Spalten, die nachstehend als Kachelkartenelemente (372, 391) bezeichnet werden,
c) Speichern von Informationen über die Kachelkartenelemente in einem Cache (400), wobei die gespeicherten Informationen Ursprungskoordinaten und Dimensionen jedes einzelnen Kachelkartenelements an der grafischen Benutzerschnittstelle (300) beinhalten,
d) Zuweisen von anzuzeigenden Kalenderelementen (322), um die Kalenderelemente unter Verwendung der Ursprungskoordinaten und der Dimensionen der einzelnen Kachelkartenelemente an der grafischen Benutzerschnittstelle (300) anzuzeigen, wobei jedes Kalenderelement (322) für eine Zeitspanne steht, die von dem Kalenderelement festgelegt wird, wobei die Ursprungskoordinaten und die Dimensionen der einzelnen Kalenderelemente so ausgelegt sind, dass sie die Anzeige jedes einzelnen Kalenderelements in Bezug auf die Zeitachse (302) unter Verwendung des Startpunkts und der Breite des Kalenderelements ermöglichen, wobei die Breite der Zeitspanne entspricht;
e) Speichern von Informationen über die Kalenderelemente (322) im Cache (400), wobei die gespeicherten Informationen für jedes Kalenderelement die Ursprungskoordinaten und die Dimensionen des Kalenderelements beinhalten;
f) Bestimmen eines Kachelkartenelements, in welches ein Kalenderelement an der grafischen Benutzerschnittstelle eingezeichnet werden soll, für jedes Kalenderelement, wobei die Bestimmung so getroffen wird, dass eine Überschneidung einer Anzeige der Kalenderelemente an der grafischen Benutzerschnittstelle vermieden wird, wobei die Bestimmung dadurch vorgenommen wird, dass die Ursprungskoordinaten und die Dimensionen sämtlicher Kalenderelemente (322) verglichen werden,
g) Abrufen der Ursprungskoordinaten und der Dimensionen der bestimmten Kachelkartenelemente (372, 391) aus dem Cache,
h) Anzeigen der Kalenderelemente an der grafischen Benutzerschnittstelle (300), wobei das Anzeigen für jedes Kalenderelement umfasst, dass das Kalenderelement dadurch an der grafischen Benutzerschnittstelle eingezeichnet wird, dass das Kalenderelement gemäß seinen Ursprungskoordinaten und Dimensionen und den abgerufenen Ursprungskoordinaten und Dimensionen des Kachelkartenelements, welches für das Kalenderelement bestimmt worden ist, positioniert wird;
i) Empfangen einer Aufforderung zur Aktualisierung der grafischen Benutzerschnittstelle und, als Reaktion darauf:
- Abrufen der Ursprungskoordinaten und der Dimensionen des entsprechenden Kachelkartenelements aus dem Cache für jedes Kalenderelement von den Kalenderelementen;
- Wiederholen von Schritt f) - h),
wobei das Teilen der grafischen Benutzerschnittstelle (300) in die Kachelkartenelemente, die Zeilen und Spalten umfassen, so durchgeführt wird, dass die Zeitspannen, die von den Kalenderelementen festgelegt werden, analysiert werden und eine Breite der Spalten so ausgewählt wird, dass die Dimensionen der einzelnen Kalenderelemente (322) exakt mit einer oder mehreren aufeinander folgenden Spalten übereinstimmen, wobei für jedes Kalenderelement die Dimensionen des Kalenderelements die aufeinander folgenden Spalten angeben, die der Zeitspanne entsprechen, die von dem Kalenderelement (322) festgelegt wird.

2. Verfahren nach Anspruch 1, wobei Koordinaten in der grafischen Benutzerschnittstelle durch ein Koordinatensystem definiert werden, wobei das Koordinatensystem umfasst: eine erste und eine zweite Koordinatenachse, wobei die erste Koordinatenachse parallel ist zu den Zeilen und die zweite Koordinatenachse parallel ist zu den Spalten der Kachelkartenelemente, wobei die Ursprungskoordinaten, die den Kalenderelementen zugewiesen werden, eine Koordinate auf der ersten Koordinatenachse umfassen, wobei für jedes Kalenderelement das Bestimmen eines Kachelkartenelements (371, 391), in welches das Kalenderelement einzuzeichnen ist, das Bestimmen einer Zeile umfasst, wobei das Zeichnen des Kalenderelements an der grafischen Benutzerschnittstelle das Positionieren des Kalenderelements gemäß seiner Koordinate auf der ersten Koordinatenachse und der bestimmten Zeile umfasst.

3. Verfahren nach Anspruch 1, wobei das Positionieren des Kalenderelements (322) gemäß seiner Ursprungskoordinaten und Dimensionen das Positionieren des Kalenderelements (322) gemäß den angegebenen aufeinander folgenden Spalten umfasst.

4. Verfahren nach einem der vorangehenden Ansprüche, wobei die Kalenderelemente mit entsprechenden Detailelementen assoziiert werden, die Metadaten beschreiben, welche mit den jeweiligen Kalenderelementen assoziiert sind, wobei das Verfahren ferner umfasst:
j) Zuweisen der Ursprungskoordinaten und Dimensionen der grafischen Benutzerschnittstelle zu den Detailelementen;
k) Speichern von Informationen über die Detailelemente im Cache (400), wobei die gespeicherten Informationen für jedes Detailelement die Ursprungskoordinaten und die Dimensionen beinhalten;
l) Bestimmen eines Kachelkartenelements (372, 391), in welches das Detailelement auf der grafischen Benutzerschnittstelle (300) zu zeichnen ist, für jedes Detailelement, wobei die Bestimmung unter Vermeidung einer Überlappung einer Anzeige der Detailelemente und der Kalenderelemente auf der grafischen Benutzerschnittstelle (300) getroffen wird, wobei die Bestimmung durch Vergleichen der Ursprungskoordinaten und der Dimensionen sämtlicher Kalenderelemente (322) und Detailelemente vorgenommen wird, wobei für ein Detailelement das bestimmte Kachelkartenelement an das Kachelkartenelement des jeweiligen Kalenderelements angrenzt,
m) Abrufen der Ursprungskoordinaten und der Dimensionen der bestimmten Kachelkartenelemente der Detailelemente aus dem Cache,
n) Anzeigen der Detailelemente an der grafischen Benutzerschnittstelle (300), wobei das Anzeigen für jedes Kalenderelement umfasst, dass das Kalenderelement dadurch an der grafischen Benutzerschnittstelle gezeichnet wird, dass das Detailelement gemäß seiner Ursprungskoordinaten und Dimensionen und der abgerufenen Ursprungskoordinaten und Dimensionen des Elements der Kachelkarte (372, 391), das für das Detailelement bestimmt worden ist, positioniert wird;
wobei das Verfahren als Reaktion auf das Empfangen der Aufforderung zur Aktualisierung der Kalenderregion ferner umfasst:
- Abrufen der Ursprungskoordinaten und der Dimensionen für jedes Detailelement aus dem Cache (400);
- Wiederholen der Schritte I)-n).

5. Verfahren nach einem der vorangehenden Ansprüche, ferner umfassend:
Zuweisen mindestens einer Funktion zu mindestens einer Anwenderaktion, die mit dem Kalenderelement assoziiert ist, wobei die mindestens eine Funktion als Reaktion auf die mindestens eine Anwenderaktion ausgeführt wird.

6. Verfahren nach einem der vorangehenden Ansprüche 4-5, ferner umfassend:
Zeichnen mindestens einer Markierung, die den einzelnen Metadaten entspricht, die mit dem Detailelement assoziiert ist.

7. Verfahren nach Anspruch 6, wobei die mindestens eine Markierung auf Basis von Dimensionen des Detailelements trunkiert wird.

8. Verfahren nach Anspruch 6 oder 7, ferner umfassend:
Zuordnen mindestens einer Funktion zu mindestens einer Anwenderaktion, die mit der mindestens einen Markierung assoziiert ist, wobei die mindestens eine Funktion als Reaktion auf die mindestens eine Anwenderaktion ausgeführt wird.

9. Verfahren nach einem der vorangehenden Ansprüche, wobei die Kalenderelemente (322) Steuerereignisse von Komponenten eines industriellen Automationssystems darstellen.

10. Tragbare Touchscreen-Vorrichtung, eine grafische Benutzerschnittstelle mit einem Touchscreen, einen Prozessor zum Steuern der Vorrichtung und einen Speicher zum Speichern von maschinenausführbaren Befehlen umfassend, wobei der Speicher einen Cache umfasst, wobei die Ausführung der Befehle bewirkt, dass der Prozessor:
a) eine Zeitachse (302) an der grafischen Benutzerschnittstelle (300) zeichnet, wobei die Zeitachse (302) von einer Startzeitkoordiante bis zu einer Endzeitkoordinate der grafischen Benutzerschnittstelle (300) verläuft,
b) die grafische Benutzerschnittstelle (300) in Zeilen und Spalten teilt, die nachstehend als Kachelkartenelemente (372, 391) bezeichnet werden,
c) Informationen über die Kachelkartenelemente in einem Cache (400) speichert, wobei die gespeicherten Informationen Ursprungskoordinaten und Dimensionen jedes einzelnen Kachelkartenelements auf der grafischen Benutzerschnittstelle (300) beinhalten,
d) anzuzeigende Kalenderelementen (322) unter Verwendung der Ursprungskoordinaten und der Dimensionen der einzelnen Kachelkartenelemente bestimmt, um die Kalenderelemente in der grafischen Benutzerschnittstelle (300) anzuzeigen, wobei jedes Kalenderelement (322) für eine Zeitspanne steht, die von dem Kalenderelement festgelegt wird, wobei die Ursprungskoordinaten und die Dimensionen der einzelnen Kalenderelemente so ausgelegt sind, dass sie die Anzeige jedes einzelnen Kalenderelements in Bezug auf die Zeitachse (302) unter Verwendung des Startpunkts und der Breite des Kalenderelements ermöglichen, wobei die Breite der Zeitspanne entspricht;
e) Informationen über die Kalenderelemente (222) im Cache (400) speichert, wobei die gespeicherten Informationen für jedes Kalenderelement die Ursprungskoordinaten und die Dimensionen des Kalenderelements beinhalten;
f) für jedes Kalenderelement (322) ein Kachelkartenelement (372, 391) bestimmt, in welches das Kalenderelement an der grafischen Benutzerschnittstelle (300) gezeichnet werden soll, wobei die Bestimmung unter Vermeidung einer Überlappung einer Anzeige der Kalenderelemente an der grafischen Benutzerschnittstelle (300) getroffen wird, wobei die Bestimmung durch Vergleichen der Ursprungskoordinaten und der Dimensionen sämtlicher Kalenderelemente (322) durchgeführt wird,
g) die Ursprungskoordinaten und die Dimensionen der bestimmten Kachelkartenelemente (372, 391) aus dem Cache abruft,
h) die Kalenderelemente an der grafischen Benutzerschnittstelle (300) anzeigt, wobei das Anzeigen für jedes Kalenderelement umfasst, dass das Kalenderelement (322) dadurch an der grafischen Benutzerschnittstelle (300) gezeichnet wird, dass das Kalenderelement gemäß seiner Ursprungskoordinaten und Dimensionen und der abgerufenen Ursprungskoordinaten und Dimensionen des Kachelkartenelements, das für das Kalenderelement bestimmt worden ist, positioniert wird;
i) eine Aufforderung zur Aktualisierung der grafischen Benutzerschnittstelle (300) empfängt und, als Reaktion darauf:
- für jedes Kalenderelement der Kalenderelemente (322) die Ursprungskoordinaten und die Dimensionen des entsprechenden Kachelkartenelements (372, 391) aus dem Cache (400) abruft;
- Schritt f) - h) wiederholt,
wobei das Teilen der grafischen Benutzerschnittstelle (300) in die Kachelkartenelemente, die Zeilen und Spalten umfassen, so durchgeführt wird, dass die Zeitspannen, die von den Kalenderelementen festgelegt werden, analysiert werden und eine Breite der Spalten so ausgewählt wird, dass die Dimensionen der einzelnen Kalenderelemente (322) exakt mit einer oder mehreren aufeinander folgenden Spalten übereinstimmen, wobei für jedes Kalenderelement die Dimensionen des Kalenderelements die aufeinander folgenden Spalten angeben, die der Zeitspanne entsprechen, die von dem Kalenderelement (322) festgelegt wird.

11. Vorrichtung nach Anspruch 10, wobei die Vorrichtung ein Mobiltelefon oder ein Tablet-Computer ist.

12. Vorrichtung nach Anspruch 11, wobei die Vorrichtung dazu dient, ein industrielles Automationssystem zu steuern.

13. Computerprogrammprodukt, wobei das Computerprogrammprodukt computerausführbaren Code für die Ausführung durch einen Prozessor trägt, der eine Vorrichtung steuert, wobei die Ausführung der Befehle bewirkt, dass der Prozessor die Verfahrensschritte durchführt, die in den vorangehenden Ansprüchen 1-9 beansprucht werden.

## Revendications

1. Procédé mis en oeuvre par ordinateur pour économiser de l'énergie dans un dispositif tactile portable comprenant une interface graphique utilisateur avec un écran tactile et une mémoire, la mémoire comprenant un cache, le procédé comprenant :
a) le tracé d'une ligne de temps (302) sur l'interface graphique utilisateur (300), où la ligne de temps (302) se déroule à partir des coordonnées d'un instant de départ jusqu'aux coordonnées d'un instant final de l'interface graphique utilisateur (300) ;
b) la division de l'interface graphique utilisateur (300) en lignes et en colonnes, dénommées par la suite entités de la carte des tuiles (372, 391),
c) le stockage de l'information concernant les entités de la carte des tuiles dans un cache (400), dans lequel l'information stockée inclut des coordonnées et des dimensions d'origine de chacune des entités de la carte des tuiles sur l'interface graphique utilisateur (300),
d) l'attribution d'entités de calendrier (322) devant être affichées de façon à afficher les entités de calendrier dans l'interface graphique utilisateur (300) en utilisant les coordonnées et les dimensions d'origine de chacune des entités du calendrier, dans lequel chacune des entités de calendrier (322) est représentative d'un laps de temps spécifié par l'entité du calendrier, dans lequel les coordonnées et les dimensions d'origine de chacune des entités de calendrier sont adaptées pour permettre à chacune des entités de calendrier de s'afficher par rapport à la ligne de temps (302) en utilisant le point de départ et la largeur de l'entité du calendrier, où la largeur correspond au laps de temps ;
e) le stockage de l'information concernant les entités de calendrier (322) dans le cache (400), dans lequel l'information stockée inclut pour chacune des entités de calendrier les coordonnées et les dimensions d'origine de l'entité de calendrier ;
f) la détermination pour chacune des entités de calendrier d'une entité de la carte des tuiles dans laquelle tracer l'entité de calendrier sur l'interface graphique utilisateur, dans lequel la détermination est réalisée en évitant un chevauchement d'un affichage des entités de calendrier sur l'interface graphique utilisateur, dans lequel la détermination est réalisée en comparant les coordonnées et les dimensions d'origine de toutes les entités de calendrier (322),
g) la récupération à partir du cache des coordonnées et des dimensions d'origine des entités de la carte des tuiles déterminées (372, 391),
h) l'affichage des entités de calendrier sur l'interface graphique utilisateur (300), dans lequel ledit affichage comprend pour chacune des entités de calendrier le tracé de l'entité de calendrier dans l'interface graphique utilisateur (300) en positionnant l'entité de calendrier conformément à ses coordonnées et ses dimensions d'origine et aux coordonnées et aux dimensions d'origine de l'entité de la carte des tuiles récupérées qui ont été déterminées pour l'entité de calendrier;
i) la réception d'une demande pour rafraichir ladite interface graphique utilisateur, et en réponse :
- la récupération, à partir du cache, pour chaque entité de calendrier, des entités de calendrier des coordonnées et des dimensions d'origine de l'entité de la carte des tuiles correspondante ;
- la répétition des étapes f) à h),
où la division de l'interface graphique utilisateur (300) en entités de la carte des tuiles comprenant les lignes et les colonnes est réalisée en analysant les laps de temps spécifiés par les entités de calendrier et en sélectionnant la largeur des colonnes de sorte que la dimension de chacune des entités de calendrier (322) correspond exactement à une ou à plusieurs colonnes successives, où, pour chaque entité de calendrier, les dimensions de l'entité de calendrier indiquent les colonnes successives correspondant au laps de temps spécifié par l'entité de calendrier (322).

2. Procédé selon la revendication 1, dans lequel les coordonnées de l'interface graphique utilisateur sont définies par un système de coordonnées, le système de coordonnées comprenant un premier et un second axe de coordonnées, le premier axe de coordonnées étant parallèle aux lignes et le second axe de coordonnées étant parallèle aux colonnes des entités de la carte des tuiles, où les coordonnées d'origine attribuées aux entités de calendrier comprennent une coordonnée sur le premier axe de coordonnées, où la détermination pour chacune des entités de calendrier (322) d'une entité de la carte des tuiles (372, 391) dans laquelle tracer l'entité de calendrier comprend la détermination d'une ligne, où le tracé de l'entité de calendrier dans l'interface graphique utilisateur comprend le positionnement de l'entité de calendrier conformément à ses coordonnées sur le premier axe des coordonnées et sur la ligne déterminée.

3. Procédé selon la revendication 1, dans lequel le positionnement de l'entité de calendrier (322) conformément à ses coordonnées et à ses dimensions d'origine comprend le positionnement de l'entité de calendrier (322) conformément aux colonnes successives indiquées.

4. Procédé selon l'une quelconque des revendications précédentes, dans lequel les entités de calendrier sont associées aux entités de détail respectives qui décrivent les métadonnées associées aux entités de calendrier respectives, où le procédé comprend en outre :
j) l'attribution des coordonnées et des dimensions d'origine des entités de détail de l'interface graphique utilisateur ;
k) le stockage de l'information concernant les entités de détail dans le cache (400), où l'information stockée inclut pour chacune des entités de détail les coordonnées et les dimensions d'origine ;
l) la détermination, pour chacune des entités de détail, d'une entité de la carte des tuiles (372, 391) dans laquelle tracer l'entité de détail sur l'interface graphique utilisateur (300), où la détermination est réalisée en évitant le chevauchement de l'affichage des entités de détail et des entités de calendrier sur l'interface graphique utilisateur (300), où la détermination est réalisée en comparant les coordonnées et les dimensions d'origine de toutes les entités de calendrier (322) avec les entités de détail, où, pour une entité de détail, l'entité de la carte des tuiles déterminée borde l'entité de la carte des tuiles de l'entité de calendrier respective ,
m)la récupération à partir du cache des coordonnées et des dimensions d'origine des entités de la carte des tuile déterminées des entités de détail,
n) l'affichage des entités de détail sur l'interface graphique utilisateur (300), où ledit affichage comprend, pour chacune des entités de détail, le tracé de l'entité de calendrier dans l'interface graphique utilisateur par le positionnement de l'entité de détail conformément à ses coordonnées et à ses dimensions d'origine et aux coordonnées et aux dimensions d'origine de l'entité de la carte des tuiles (372, 391) déterminée pour l'entité de détail ;
où, en réponse à la réception de la demande de rafraichissement de ladite zone du calendrier, le procédé comprend en outre :
- la récupération, à partir du cache (400), pour chacune des entités de détail, des coordonnées et des dimensions d'origine ;
- la répétition des étapes I) à n).

5. Procédé selon l'une quelconque des revendications précédentes, comprenant en outre :
l'attribution d'au moins une fonction à au moins une action de l'utilisateur en association avec l'entité du calendrier, où l'au moins une fonction est exécutée en réponse à l'au moins une action de l'utilisateur.

6. Procédé selon l'une quelconque des revendications 4 à 5, comprenant en outre :
le tracé d'au moins une étiquette correspondant à chacune des métadonnées associées à l'entité de détail.

7. Procédé selon la revendication 6, dans lequel l'au moins une étiquette est tronquée sur la base des dimensions de l'entité de détail.

8. Procédé selon les revendications 6 ou 7, comprenant en outre :
l'attribution d'au moins une fonction à au moins une action de l'utilisateur associée à l'au moins une étiquette, où l'au moins une fonction est exécutée en réponse à l'au moins une action de l'utilisateur.

9. Procédé selon l'une quelconque des revendications précédentes, dans lequel les entités de calendrier (322) représentent les événements de contrôle des composants d'un système d'automatisation industrielle.

10. Dispositif à écran tactile portable comprenant une interface graphique utilisateur avec un écran tactile, un processeur pour le contrôle du dispositif et une mémoire pour le stockage des instructions exécutables par la machine, la mémoire comprenant un cache, où l'exécution des instructions amène le processeur à :
a) tracer une ligne de temps (302) sur l'interface graphique utilisateur (300), où la ligne de temps (302) se déroule à partir des coordonnées d'un instant de départ jusqu'aux coordonnées d'un instant final de l'interface graphique utilisateur (300),
b) la division de l'interface graphique utilisateur (300) en lignes et en colonnes, dénommées par la suite entités de la carte des tuiles (372, 391),
c) le stockage de l'information concernant les entités de la carte des tuiles (372, 391) dans le cache (400), où l'information stockée inclut les coordonnées et les dimensions d'origine de chacune des entités de la carte des tuiles sur l'interface graphique utilisateur (300),
d) l'attribution des entités de calendrier (322) devant être affichées de façon à afficher les entités de calendrier (322) dans l'interface graphique utilisateur (300) en utilisant les coordonnées et les dimensions d'origine de chacune des entités du calendrier, où chacune des entités de calendrier (322) est représentative d'un laps de temps spécifié par l'entité du calendrier, où les coordonnées et les dimensions d'origine de chacune des entités de calendrier sont adaptées pour permettre à chacune des entités de calendrier de s'afficher par rapport à la ligne de temps (302) en utilisant le point de départ et la largeur de l'entité du calendrier, où la largeur correspond au laps de temps ;
e) le stockage de l'information concernant les entités de calendrier (322) dans le cache (400), où l'information stockée inclut, pour chacune des entités de calendrier, les coordonnées et les dimensions d'origine de l'entité de calendrier ;
f) la détermination, pour chacune des entités de calendrier (322), d'une entité de la carte des tuiles (372, 391) dans laquelle tracer l'entité de calendrier sur l'interface graphique utilisateur (300), où la détermination est réalisée en évitant le chevauchement de l'affichage des entités de calendrier sur l'interface graphique utilisateur (300), où la détermination est réalisée en comparant les coordonnées et les dimensions d'origine de toutes les entités de calendrier (322),
g) la récupération, à partir du cache, des coordonnées et des dimensions d'origine des entités de la carte des tuiles déterminées (372, 391),
h) l'affichage des entités de calendrier sur l'interface graphique utilisateur (300), où ledit affichage comprend, pour chacune des entités de calendrier, le tracé de l'entité de calendrier (322) dans l'interface graphique utilisateur (300) en positionnant l'entité de calendrier conformément à ses coordonnées et ses dimensions d'origine et aux coordonnées et aux dimensions d'origine de l'entité de la carte des tuiles récupérées qui ont été déterminées pour l'entité de calendrier ;
i) la réception d'une demande pour rafraichir ladite interface graphique utilisateur (300), et en réponse :
- la récupération, à partir du cache (400), pour chaque entité de calendrier des entités de calendrier (322), des coordonnées et des dimensions d'origine de l'entité de la carte des tuiles (372, 391) correspondante ;
- la répétition des étapes f) à h),
où la division de l'interface graphique utilisateur (300) en entités de la carte des tuiles comprenant des lignes et des colonnes est réalisée en analysant les laps de temps spécifiés par les entités de calendrier et en sélectionnant la largeur des colonnes de sorte que la dimension de chacune des entités de calendrier (322) correspond exactement à une ou à plusieurs colonnes successives, où, pour chacune des entités de calendrier, les dimensions de l'entité de calendrier indiquent les colonnes successives correspondant au laps de temps spécifié par l'entité de calendrier (322).

11. Dispositif selon la revendication 10, dans lequel le dispositif est un téléphone mobile ou une tablette.

12. Dispositif selon la revendication 11, dans lequel le dispositif est exploité pour contrôler un système d'automatisation industrielle.

13. Produit de programme informatique, le produit de programme informatique contenant un code exécutable par ordinateur pour être exécuté par un processeur contrôlant un appareillage, où l'exécution des instructions amène le processeur à réaliser les étapes du procédé tel que revendiqué dans les revendications 1 à 9 précédentes.
